# EUROPEAN PATENT SPECIFICATION

(11) **EP 0 983 577 B1**
(45) Date of publication and mention of the grant of the patent: **17.07.2002**
(21) Application number: 98919381.8
(22) Date of filing: 05.05.1998
(51) Int. Cl.: G07F 15/00, G07F 7/02, G01F 15/00

(54) **CREDIT TRANSFER IN METERING SYSTEMS**
GUTHABENÜBERTRAGUNG IN MESSSYSTEMEN
TRANSFERT DE CREDIT POUR SYSTEMES DE COMPTEURS

(30) Priority: 12.05.1997 GB 9709602
(43) Date of publication of application: 08.03.2000
(73) Proprietor: Siemens Metering Limited, Oldbury, Bracknell, Berkshire, RG12 8FZ (GB)
(72) Inventor: WILCZYNSKI, Piotr, Pawel, Telford, Shropshire TF3 1NH (GB)
(74) Representative: Allen, Derek
(86) International application number: GB9801295
(87) International publication number: WO9852167

(56) References cited:
- EP-A- 0 378 454
- WO-A-95/22125
- GB-A- 2 153 573
- GB-A- 2 169 121
- GB-A- 2 208 955
- GB-A- 2 306 241

## Description

The present invention relates generally to credit transfer in metering systems for metering the supply of a service, such as gas, electricity, water, pay television etc., to a consumer. In the following, particular reference will be made to gas metering systems though it is to be understood that the invention can be applied in metering systems for other services.

Payment gas meter systems are known whereby the consumer pays in advance for gas consumption or makes periodic payments against an allowed credit limit for example. In such systems, the gas meter apparatus at the consumer's premises incorporates a cut-off valve which is selectively controllable to cut off the gas supply. The valve can thus be controlled to cut off the supply when the consumer's credit has expired, and to restore the supply when further credit has been purchased. While such systems were originally implemented by coin-operated payment meters, more recently some form of portable data storage device, and in particular memory cards such as magnetic stripe cards and smart cards, have been employed to load the meter with credit. With these card operated systems, the consumer is generally required to take the card to a remote point of sale where payment is made and the memory card is loaded with the purchased credit. The card is then taken back to the consumer's premises and inserted in a card reader of the metering apparatus, whereupon the newly issued credit is read from the card and the gas supply controlled accordingly.

The latter type of system is favoured for various reasons, not least because the meter does not actually hold any money so there is no incentive to vandalise the meter as was the case with coin-operated systems. Another reason is that card operated systems facilitate remote accounting by the service supplier. These systems also allow for implementation of security measures, for example to counter fraud by consumers, since various additional data such as coded passwords, transaction numbers, time and date stamps etc. can be recorded on the card. Such data can be used, together with appropriate algorithms in the system equipment to process the data, for authentication purposes, eg. in the meter prior to release of credit for use by the consumer's system. Among other things, such security measures should be designed to prevent the possibility of so called "replay attacks" where purchased credit is loaded to the meter more than once. Some previous systems have addressed this problem by programming the meter to erase or otherwise invalidate credit on the card once the credit has been loaded to the meter. A potential problem with this type of system is that, if the card is withdrawn prematurely from the meter, credit may not be properly erased/invalidated so that the card might be presented to the meter again to reload the same credit. Where the meter does not release loaded credit until correct erasure/invalidation of credit from the card has been verified, if credit data on the card is corrupted due to premature removal of the card during the erasure/invalidation process, the result may be loss of credit to the consumer. While such problems can be alleviated by adoption of appropriate credit transfer and erasure algorithms in the system, these algorithms can end up being very complicated, increasing processing demands and memory requirements in the system, particularly in the customer equipment, with consequent cost implications. As an example, GB 2153573 discloses a system which attempts to address some of the problems mentioned above, but the system is complex and involves significant use of memory in the system equipment.

According to one aspect of the present invention there is provided a credit transfer system for transferring credit, representing credited consumption of a metered service issued to a consumer, to a consumer metering apparatus which is selectively operable to cut-off the supply of the service to the consumer, the system comprising:
payment means for controlling supply of the metered service by the consumer metering apparatus in dependence on received credit and having a memory for storing received credit data indicative of the total of all credit ever received by the payment means; and
a portable data storage device. associated with the payment means, for storing issued credit data indicative of the total of all credit ever issued for the payment means;
wherein the system includes means for verifying the association of the data storage device and payment means, and wherein the payment means is operative to read the issued credit data from the associated data storage device and, if the association is verified, to determine from the issued credit data and said received credit data the amount of any newly issued credit, and to update said received credit data in accordance with the newly issued credit so determined.

In embodiments of the present invention, therefore, the portable data storage device associated with a particular payment means stores the total of all credit ever issued for that payment means, and the payment means itself stores the total of all credit ever received by the payment means. When the data storage device is presented to the payment means for loading newly issued credit, the payment means calculates the newly issued credit from these two totals, and then updates the received credit total accordingly. This elegantly simple system can prevent both replay attacks and loss of credit to the consumer without the need for complex processing or significant use of memory. Once the issued credit data has been read from the data storage device, updating of the received credit data in the payment means prevents a replay attack since, if the card is presented again, the newly issued credit will be calculated as zero. If the transfer process is interrupted, preventing successful reading of the issued credit data or verification of the data storage device (eg. where the data storage device is a card due to premature removal of the card by the consumer), then the received credit data in the payment means will remain unchanged and the transfer process can be repeated without loss of credit to the consumer.

While the portable data storage device may be any suitable device which provides for the necessary storage and retrieval of data, it is preferred that the device is a memory card (such as a smart card or magnetic stripe card for example), and that the payment means includes an appropriate card reader into which the card is inserted by the consumer. The portable data storage device will be referred to hereinafter as a card, but it is to be understood that other devices might equally be employed.

The payment means may be integrated with the meter in the consumer metering apparatus, but in preferred embodiments the payment means is provided in a separate payment unit which is arranged for remote communication with the meter, via hard-wired or wireless links. The payment unit can then be located at any convenient point in the consumer's premises for controlling supply of the metered service in dependence on the received credit. The degree of control provided by the payment means can be varied as desired for a particular system. For example, the control may be indirect, in that systems may be envisaged where the payment means simply communicates the current received credit data to a meter control unit which monitors consumption and controls the supply accordingly. It is preferred, however, that the payment means exercises a greater degree of control over the metering apparatus. In particular, in one preferred embodiment the payment means is arranged to receive consumption data, indicative of consumption of the metered service, from the metering apparatus and to determine from this and the received credit the amount of credit which is still available for use (ie. unused credit) on an ongoing basis as consumption proceeds. The unused credit is thus updated in accordance with consumption and when newly issued credit is received, and supply of the service is controlled in dependence on the unused credit. For example, the payment means may operate to cut off the supply by sending a control signal to a cut-off valve when the unused credit falls to zero. The consumption allowed to a consumer based on input credit could be determined in a number of ways, eg. as a quantity of the service, such as volume of gas etc., or a time period, eg. a number of days, weeks etc., of consumption.

As indicated above, the card, or other data storage device, is associated with the payment means, and the system includes means for verifying this association when the card is presented to the payment means for loading newly issued credit. The purpose of this association is to prevent, or at least limit, the possibility of the card being usable with any other payment means than that for which it was issued. The way in which this association is indicated, and how it is verified in the system, can be varied. For example, the cardholder could be issued with a PIN number for the particular payment means with which the card is to be used. This number could then be keyed in to the payment means when the card is presented, and verified by comparison with the number prestored in the payment means. However, such a system has disadvantages in that, firstly, it is reliant on the consumer, and, secondly the data used to verify the association is not carried by the card itself and this could leave the system open to abuse. Accordingly, it is advantageous for the card itself to store association data indicating said association between the card and payment means, and for the means for verifying the association to process the association data stored on the card in order to verify the association. Preferably, the verifying means is provided in the payment means.

As the function of the association data stored on the card is to ensure that (ideally) the card can only be used with the particular payment means for which credit has been purchased, any data which enables the system to verify that a card presented to the payment means is the correct card for that payment means will suffice for this purpose. Numerous types of association data and verification systems will be apparent to those skilled in the art. For example, a simple id (such as the meter serial number or the card serial number) could be stored on the card and in the payment means to uniquely identify the card as associated with a particular payment means. The payment means could then check the card id (or indeed the card could check the payment means id where such a processing facility is provided on the card) to verify the association. In a particularly simple and yet secure embodiment, the association data is provided (at least in part) by a checksum for the issued credit data. This checksum is derived by a predetermined algorithm which may be unique to the payment means, and the payment means is operable to verify the checksum using this predetermined algorithm. Thus, when the card is presented at the point of sale and new credit purchased, the point of sale terminal derives the checksum for the updated issued credit data using the appropriate algorithm for the associated payment means. The nature of the algorithm. and the way it is made unique (where this is so) to individual payment means, can be varied as desired. For example, the same type of algorithm may be used for all systems, but in any particular transaction the algorithm may utilise at least one particular element which is unique to the appropriate payment means. For maximum security, the checksum should be a secure checksum, such as a cryptographic checkfunction which is derived by a key-based cryptographic algorithm, so that "reverse engineering" by analysis is computationally infeasible.

The checksum serves the dual purpose of enabling the association of the card and payment means to be verified and also to validate authenticity and integrity of the issued credit data over which the checksum is calculated. Where the checksum alone provides the association data, it is preferred that the algorithm used to derive the checksum is wholly unique to the payment means. This ensures that the card can only be used with one particular payment means, and no others. However, a degree of security can still be provided if the algorithm is unique to a subset of unrelated payment means.

Of course, a checksum could be employed in addition to some further system for verifying the association, such as the id checking system mentioned above. The provision of a (preferably unique) id as association data, in addition to the association data provided by the checksum, is in fact preferred for ease of implementation as will be described below.

Other data may of course be stored on the card. For example, in some preferred embodiments the card additionally stores transferred credit data which is indicative of the total of all credit ever transferred by the card to the payment means. In such cases, the transferred credit data can be updated by the payment means once the newly issued credit has been determined. Providing the transferred credit data on the card in addition to the issued credit data enables the amount of any newly issued credit to be determined from the card itself, ie. without reference to the received credit data in the payment means. Thus, there is a facility for the customer to be told how much credit is on the card, for example by the point of sale terminal. This facility is particularly useful if a receipt is not printed at the point of sale, and requires only a small increase in the amount of data stored on the card. The provision of the transferred credit data also has advantages for implementation of the system as described further below.

Where the card stores transferred credit data which is updated by the payment means, it is preferred that updating of the transferred credit data is carried out before updating of the received credit data in the payment means. It is particularly preferred that the payment means is arranged to verify that the transferred credit data has been correctly updated prior to updating the received credit data. These measures help to ensure that the card always contains a correct record of the credit situation. Indeed, updating of the received credit data and release of credit for use by the system may be made dependent on correct updating of the transferred credit data on the card as an additional precaution. Even where the transferred credit data is provided. however, the payment means still calculates the newly issued credit from the issued credit data and received credit data as previously described.

Another aspect of the invention provides payment means for use in a credit transfer system according to the first aspect of the invention. Further, it is to be appreciated that, where features are described herein with reference to apparatus embodying the invention, corresponding features may be provided in a method of the invention, and vice versa. In particular, another aspect of the present invention provides a method of transferring credit, representing credited consumption of a metered service issued to a consumer, to consumer metering apparatus which is selectively operable to cut-off the supply of the service to the consumer and comprises payment means for receiving credit and having a memory for storing received credit data indicative of the total of all credit ever received by the payment means, and a service meter for metering consumption of the service by the consumer, the method comprising:
storing newly issued credit in a portable data storage device which is associated with the payment means, the newly issued credit being stored by updating issued credit data stored in the device which indicates the total of all credit ever issued for the payment means;
after transport of the device to the payment means, verifying the association of the device and payment means by verification means of the system;
reading said issued credit data from the data storage device into the payment means; and
in the payment means, if said association is verified, determining from the issued credit data and said received credit data the amount of the newly issued credit and updating said received credit data in accordance with the newly issued credit.

### Embodiments of the invention

Another aspect of the invention provides a method of transferring credit according to claim 15 will now be described, by way of example, with reference to the accompanying drawings in which:
Figure 1 is a schematic illustration of a metering system embodying the invention;
Figure 2 illustrates schematically various data "registers" employed in the system of Figure 1;
Figure 3 is a flow chart illustrating operation of the point of sale terminal for a normal credit purchase operation;
Figure 4 is a flow chart illustrating operation of the payment means for a normal credit loading operation;
Figure 5 illustrates the operation of the point of sale terminal for a newly issued card:
Figure 6 illustrates operation of the payment means when loading credit from a newly issued card; and
Figure 7 illustrates operation of the point of sale terminal when a newly issued card is returned to the terminal after loading credit to the payment means.

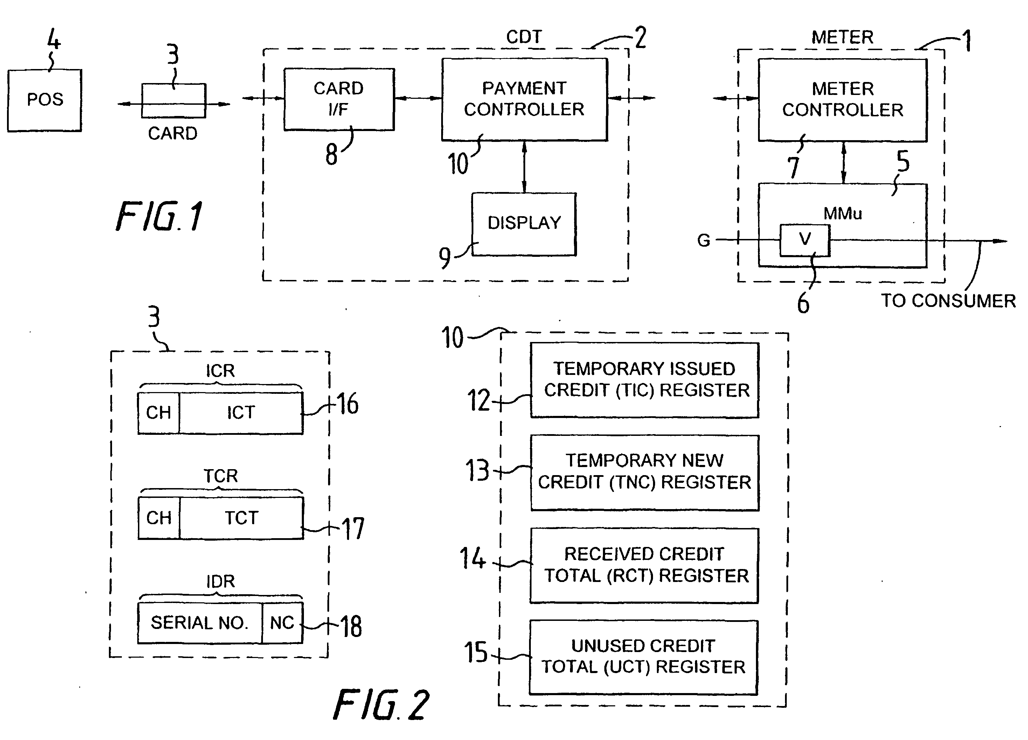

Figure 1 illustrates schematically the main elements of a metering system embodying the invention. The system includes a consumer metering apparatus which comprises a meter 1 and a payment unit 2 which is hereinafter referred to as the customer display terminal or CDT. The consumer is provided with a memory card 3. such as the smart card or magnetic stripe card, for use with the payment means 2. Also shown is a point of sale terminal (POS) 4 which is typically located at a public location to which the consumer takes the card 3 in order to purchase credit.

The meter 1 comprises a basic mechanical meter unit (MMU) 5 which meters the gas supply G and incorporates a cut-off valve 6 which is selectively controllable to cut off the supply of gas to the consumer. The meter 1 also includes a meter controller 7 which receives the meter data (ie. consumption data) from the MMU 5 and controls operation of the cut-off valve 6. The meter controller 7 can communicate with the CDT 2 which is located at a convenient access position in the consumer's premises. The CDT 2 comprises a card interface unit 8 of generally known type for transfer of data with the card 3 when the card is inserted in a slot (not shown) of the unit. The CDT includes a display 9 for displaying messages. instructions etc. to the consumer. The card interface 8 and display 9 are controlled by a payment controller 10 which can also communicate with the meter controller 7 of the meter 1. The communication link between the payment controller 10 and meter controller 7 may be a hardwired or a wireless link as desired for a particular application.

The basic operation of the system is that, when the consumer wishes to purchase credit, he takes the card 3 to the POS 4 which is also provided with a card interface and suitable control circuitry (not shown). The customer makes the desired payment and this payment is keyed into the POS 4 by the POS operator with the card 3 inserted in the terminal. The card 3 is loaded with the purchased credit as described in more detail below. (In this regard, it will be understood that the "credit" can be represented in any desired units, eg. monetary value or consumption units such as kilowatt hours (kWh) of energy for example). The consumer then returns to the CDT 2 and inserts the card 3 whereupon the purchased credit is loaded to the payment controller 10 as will be described in more detail below. The payment controller 10 adds the purchased credit to any unused credit still remaining in the system. In this embodiment, the payment controller periodically receives consumption data (eg. in the form of meter readings) from the meter controller 7 to enable the unused credit to be monitored on an ongoing basis as consumption proceeds. In a basic mode of operation, when all credit has been used up the payment controller 10 transmits a control signal to the meter controller 7 which in turn activates the valve 6 to cut off the supply to the consumer. The consumer must then purchase further credit, and when this is loaded to the CDT 2 the payment controller 10 transmits a further control signal causing the valve 6 to be opened and the gas supply restored.

Figure 2 illustrates schematically the data storage structure in the payment controller 10 and card 3. As illustrated on the right-hand side of Figure 2. the payment controller 10 is provided with four data storage registers 12 to 15. The register 12 is the temporary issued credit (TIC) register, and the register 13 is the temporary new credit (TNC) register. These registers, use of which will be explained in more detail below, are required to store data on a temporary basis only and are preferably implemented in RAM in the payment controller 10. The register 14 is the received credit total (RCT) register which stores the received credit data as described below The register 15 is the unused credit total (UCT) register which stores the unused credit and is updated on an ongoing basis by the payment controller in accordance with consumption and newly issued credit. The registers 14 and 15 are implemented in non-volatile memory.

The left-hand side of Figure 2 shows the basic data storage format on the card 3. For ease of description, the data storage structure will be described in terms of "registers" of the card though strictly the features described here are not registers as such. In practice the relevant data can simply be stored at assigned memory locations in the card memory for access by the system units as required. In accordance with the illustration, however, the card is shown as having an issued credit register (ICR) 16 which contains the issued credit total ICT. The issued credit total ICT normally represents the total of all credit ever issued for the associated payment means 2. The ICR 16 also contains a checksum CH for the issued credit data ICT. Similarly, a transferred credit register (TCR) 17 contains the transferred credit total TCT which normally represents the total of all credit ever transferred to the associated payment means 2. Again, a checksum CH is provided for the transferred credit data TCT in the TCR 17. The card is also provided with an id register (IDR) 18 which contains a unique card serial number and new card flag NC the function of which will be described hereinafter.

The card 3 in this embodiment is uniquely associated with the CDT 2 so that the card can only be used with this CDT and no others. This association is indicated by both the card serial number and the checksums CH in the registers ICR 16 and TCR 17 of the card. In this embodiment, the checksums CH are cryptographically secure and are calculated in the POS 4 and CDT 2 when required using a cryptographic algorithm which utilises an element, referred to hereinafter as the "CDT code", which is unique to the CDT. This CDT code is stored in the payment controller 10, and the POS 4 also keeps a record of all the CDT codes for CDTs in use in the system, referenced by the serial number of the card 3 associated with each CDT 2. In this embodiment, for added security the serial number of the card 3 is also unique as indicated above, and this serial number is stored in the payment controller 10 of the associated CDT 2. While both the serial number and CDT code are individually unique in this preferred embodiment, it will be appreciated that neither need be unique in themselves but the combination of card serial number plus CDT code assigned to the associated CDT could be unique. Also, while uniqueness of the association of card and CDT is clearly advantageous for security reasons, it is not an absolute requirement.

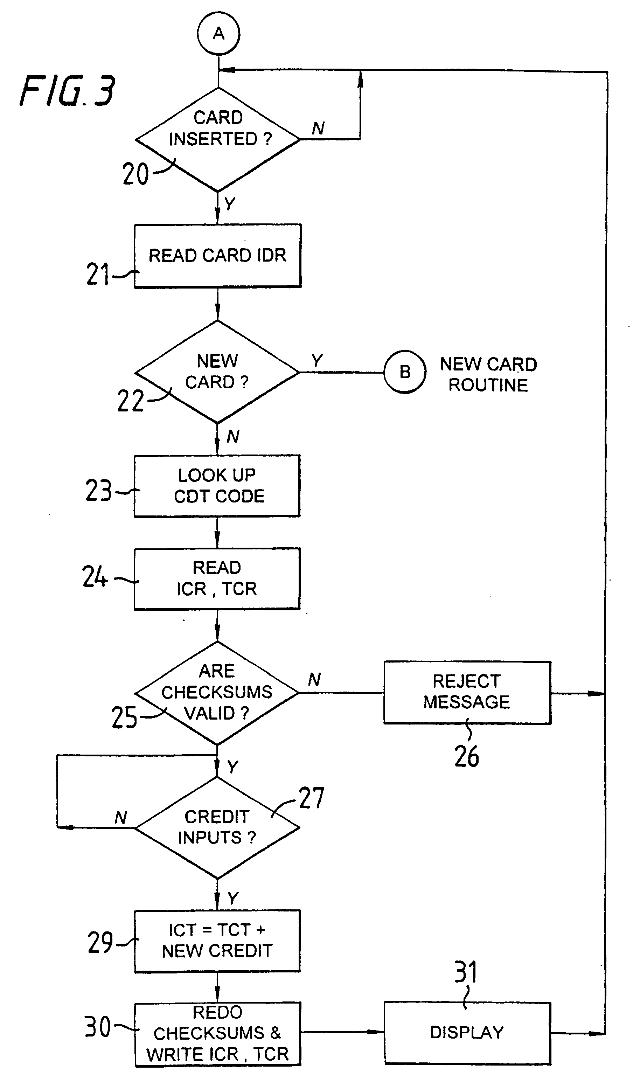

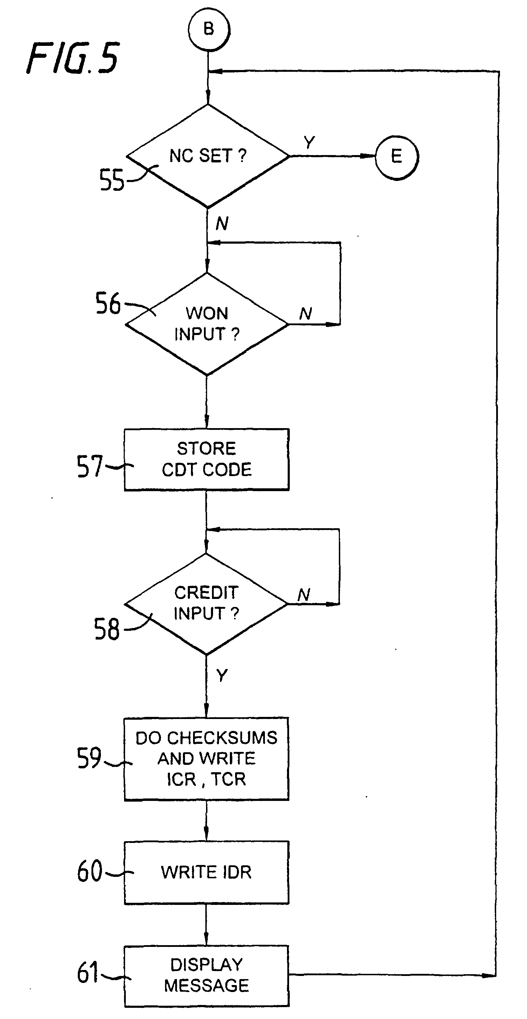

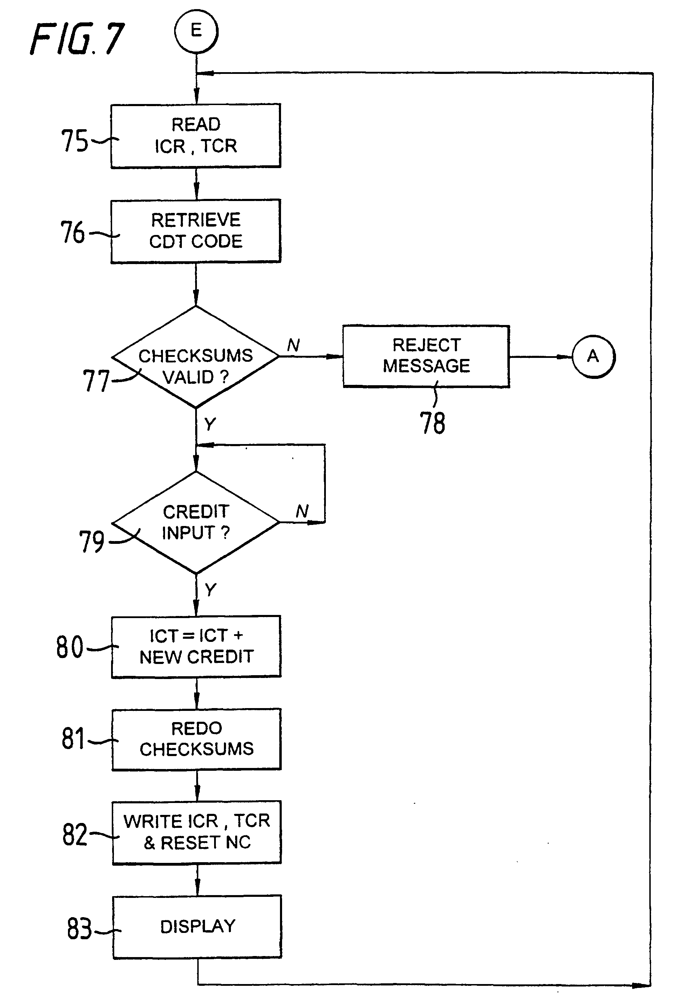

The operation of the POS 4 for a normal credit purchase operation will first be described with reference to Figure 3. This flowchart shows the operation with an established card. The operation for newly issued cards will be described later with reference to Figures 5 and 7. For an established card 3, the issued credit total ICT in the ICR 16 represents the total of all credit ever purchased for the associated CDT 2. Similarly, the transferred credit total TCT in the TCR 17 represents the total credit ever transferred to the CDT 2. The new card flag NC will also be set at zero, indicative of an established card.

Referring to Figure 3, at step 20 the POS 4 awaits insertion of a card 3. When insertion of card is detected, the POS 4 reads the card id register IDR 18 at step 21. At step 22, the POS 4 determines whether the card is a new card as indicated either by the absence of a serial number (IDR 18 blank) or by a new card flag NC which is set to "1". If a new card is identified, the operation proceeds to the new card routine to be described hereinafter. For an established card, the operation proceeds to step 23 where the POS accesses the CDT code associated with the card serial number. At step 24, the POS 4 reads the contents of the ICR 16 and TCR 17 from the card. At step 25, the POS 4 verifies the checksums CH read from the registers 16 and 17 by recalculating these checksums over the data ICT and TCT using the unique CDT code retrieved at step 23 and the secure checksum calculation algorithm. If the calculated checksums do not correspond to those read from the card. the card is rejected at step 26 and an appropriate error message displayed. (In this step, the POS may allow operation to proceed if the data read from the TCR only is found to be corrupted, since this might occur due to premature removal of the card from the CDT as discussed below and does not affect overall operation of the system).

Assuming the checksums are valid, the POS 4 awaits input of the credit amount by the POS operator at step 27. When the credit is keyed into the POS 4, the new credit is added to the issued credit total ICT stored in the POS to obtain the updated value for ICT at step 29. At step 30, the POS 4 recalculates the checksums for ICT and TCT using the appropriate CDT code, and rewrites this data to the registers 16 and 17 on the card. The reason that step 30 provides for recalculating the checksum for the transferred credit data TCT is that, in this preferred embodiment, the checksum calculation algorithm incorporates an element which is varied for each transaction with the card. This could be a simple transaction number for example, so that the overall algorithm, and hence the valid checksum, varies with each card transaction. After step 30, the POS 4 may display a suitable transaction complete message at step 31 whereupon the card can be withdrawn and the operation returns to step 20.

It will be appreciated that, since ICT simply represents the total of all data ever issued for the CDT associated with the card 3, the system operates effectively even if the customer returns to the POS 4 to "top up" the credit before previously purchased credit has been loaded to the CDT. Further, the provision of the TCT on the card enables the POS 4 to calculate the total available credit on the card and display this to the consumer if desired.

The POS 4 keeps a record of all card transactions and this data can be periodically communicated to a central computer for accounting purposes by the service supplier.

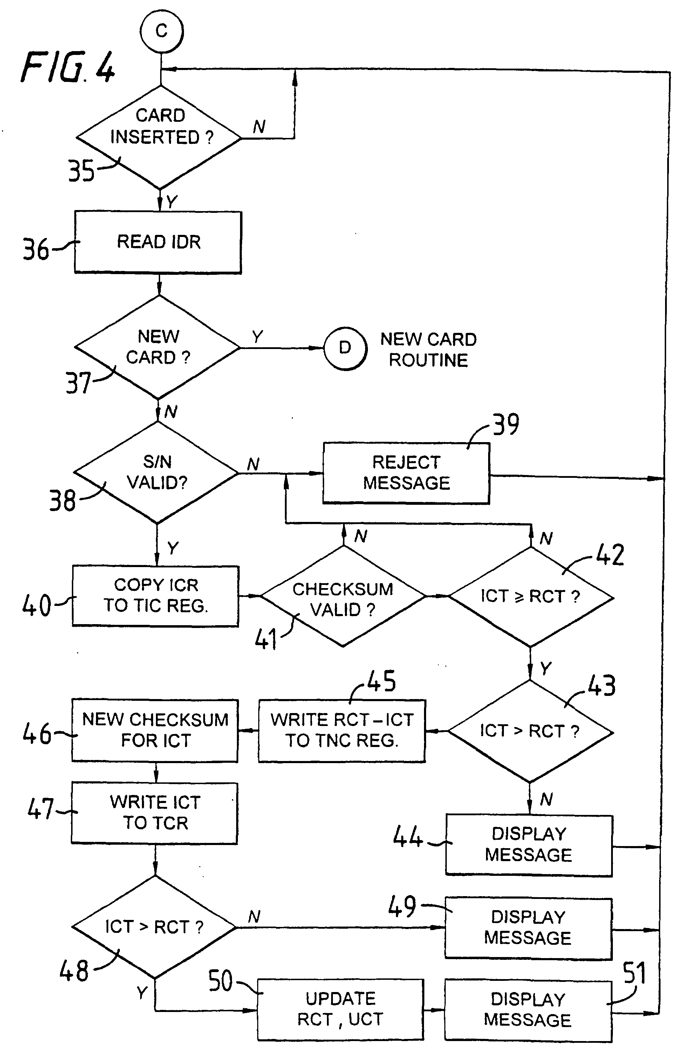

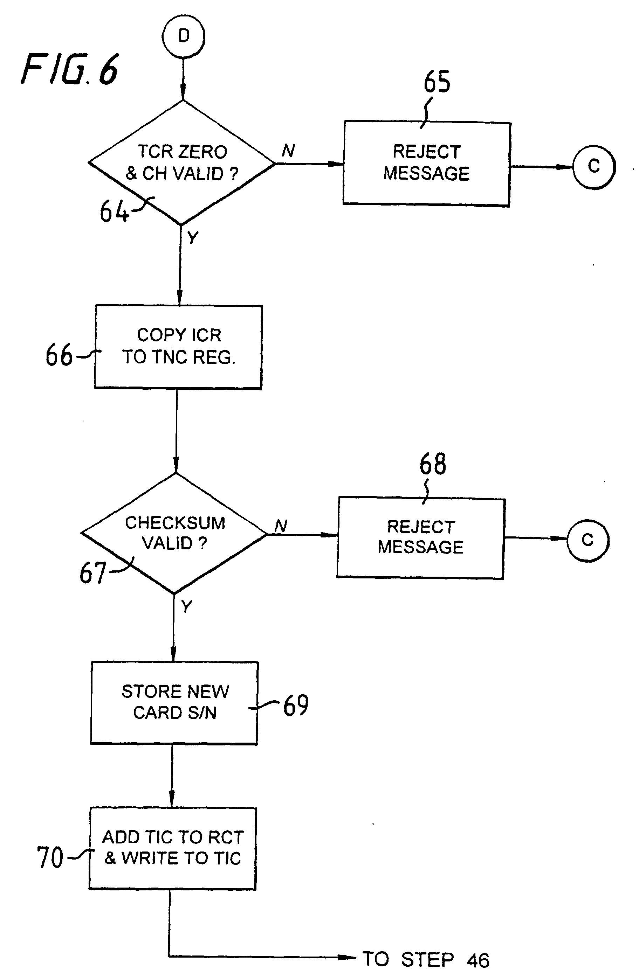

Figure 4 shows the operation of the CDT for a normal credit update with an established card. The operation of the CDT with a newly issued card will be described with reference to Figure 6. When insertion of the card 3 in the card interface 8 of CDT 2 is detected at step 35, the CDT proceeds to read the contents of the id register IDR 18 of the card at step 36. At step 37 the payment controller 10 determines whether the NC flag is set indicating that the card is a new card. If so, the operation proceeds to the new card routine to be described with reference to Figure 6. Assuming the card is not a new card, (NC flag unset) the payment controller 10 checks at step 38 that the card serial number corresponds to that stored in its internal memory as the correct card for that CDT. If not, the card is rejected at step 39 and a suitable error message is displayed on the display 9. Assuming the serial number is valid, the payment controller 10 copies the contents of the ICR 16 on the card to its temporary issued credit register 12, at step 40. At step 41 the payment controller 10 authenticates the checksum CH for the issued credit total ICT by recalculating the checksum using its own CDT code and the appropriate transaction sequence number in the checksum calculation algorithm. If the checksum is incorrect, the operation reverts to step 39 where the card is rejected and an error message displayed. Assuming the checksum is valid, the payment controller checks at step 42 that the issued credit total ICT is greater than or equal to the received credit total RCT stored in its own internal register 14. This represents a further security check since, for established cards, this condition should always be satisfied and if the result of step 42 is "no" then a problem has occurred and the card is rejected at step 39.

At step 43, the payment controller checks whether there is newly issued credit on the card by checking that ICT is greater than RCT and if not a suitable "no new credit" message is displayed at step 44. Assuming there is newly issued credit on the card as represented by RCT - ICT, the newly issued credit value is written to the temporary new credit register 13 at step 45. At step 46, the payment controller 10 calculates the new checksum for the issued credit total ICT in the TIC register 12 and writes this together with the ICT to the transferred credit register TCR 17 of the card, thus updating the transferred credit total TCT to correspond to ICT. At step 48, the payment controller 10 verifies that the data has been correctly written to the TCR 17 (eg. by re-reading this data and comparing with the contents of the TIC register 12). If the data is not verified, eg. because the card has been prematurely withdrawn by the consumer, an instruction will be displayed at step 49 and the operation reverts to step 35. Only if updating of the TCR 17 is verified at step 48 does the payment controller 10 proceed to step 50. In this step, the payment controller updates the received credit total RCT by writing the current contents of the TIC register 12 to the received credit register 14. and updates the unused credit total UCT by adding the contents of the TNC register 13 to the current total in the unused credit register 15. Thus, the received credit total RCT is updated in accordance with the newly issued credit and this credit is released for use by the system through updating of UCT. A suitable message is displayed at step 51, and the operation then reverts to step 35.

It will be seen that the above operation prevents replay attacks and loss or credit to the consumer through premature removal of the card from the CDT. If the card is pulled out before RCT is updated in the CDT, the card can simply be presented again to load the newly issued credit. Once RCT is updated, if the card is presented again without purchasing more credit, the newly issued credit calculated from ICT and RCT will be identified as zero. While there is some possibility of TCT being corrupted if the card is pulled out while the TCR 17 is being updated by the CDT, this merely prevents the POS operator from telling the customer how much credit was previously purchased. The TCT will be corrected next time the card is used to load credit to the CDT.

The above describes the operation for an established card. Figure 5 shows the operation of the POS terminal 4 where a card is newly issued to a consumer, eg. to a new customer or to replace a card lost by an existing customer. In this embodiment, a newly issued card will essentially be blank, ie. there will be no data in the registers 16 to 18. A new card can only be brought into commission when the customer has first contacted the service supplier to get a "work order number" (WON) which is given to the POS operator when the customer first wishes to purchase credit.

The blank card is inserted in the POS 4 and, having identified the card as a new card at step 22 in Figure 3, the POS checks at step 55 in Figure 5 whether the new card flag NC is set. This will be the case when a newly issued card is first returned to the POS after having been used to load credit to the CDT as will be described below with reference to Figure 7. Assuming the card is blank and hence the NC flag unset, the POS 4 then awaits input of the work order number at step 56. This work order number will identify the serial number to be allocated to the new card and also the CDT code of the customer's CDT 2. At step 57, the POS 4 stores the new card serial number against the CDT code in its internal record for future reference, and then awaits input of the purchased credit at step 58. On input of the credit, at step 59 the POS 4 calculates the appropriate checksum for the newly issued credit and writes this to the ICR 16 on the card. In this situation, therefore the value of ICT on the card corresponds to the value of the newly issued credit only. Similarly, in this step the POS terminal 4 writes a value of zero as the transferred credit total TCT in the TCR 17 with the appropriate checksum. At step 60, the POS terminal 4 writes the new card serial number to the id register 18 and sets the NC flag 18 in this register to "1". A transaction complete message is then displayed at step 61, indicating that the card can be withdrawn, and the operation reverts to step 20 in Figure 3.

Figure 6 shows the situation when the newly issued card is first presented to the CDT 2 after the operations of Figure 5. Thus, having identified the inserted card as a new card at step 37 of Figure 4, at step 64 in Figure 6 the payment controller 10 additionally checks that the value of TCT in the transferred credit register 17 of the card is zero as expected and that the checksum is correct. If not, the card is rejected at step 65 and operation reverts to step 35. Assuming the contents of TCR are validated, at step 66 the payment controller 10 copies the contents of the ICR 16 to its TNC register 13 and, at step 67, verifies the checksum CH for the read value of ICT. If the checksum is invalid, a message is displayed at step 68 and the card rejected, operation reverting to step 35. Assuming the checksum is validated at step 67, at step 69 the payment controller 10 stores the new card serial number in its internal memory, overwriting any previous card serial number, so that the CDT 2 will subsequently recognise the card 3 as its associated card. Operation then proceeds to step 70 where the new credit stored in the TNC register 13 is added to the current received credit total RCT in the register 14, and the resulting value (=ICT) is stored in the temporary issued credit register 12. The operation then continues as the flowchart of Figure 4 starting with step 46. After this stage, therefore, the TCR 17 on the card will be up-to-date, though the ICR 16 still only contains a value of ICT equal to the credit just loaded to the CDT 2.

When the card is next presented to the POS terminal 4 after the first credit loading operation of Figure 6, the operation is as shown in Figure 7. Thus, having identified the inserted card as a new card for which the new card flag NC is set at step 55 of Figure 5, the operation proceeds to step 75 in Figure 7 where the contents of the ICR 16 and TCR register 17 on the card are read to the internal memory of the POS terminal 4. At step 76. the POS terminal 4 looks up the CDT code associated with the card serial number and at step 77 determines whether the checksums are valid for the values of ICT and TCT read from the ICR 16 and TCR 17. If not, the card is rejected at step 78 and operation reverts to step 20. Assuming the checksums are verified, the POS 4 awaits input of the new credit at step 79. On receipt of the new credit, correct value for ICT is calculated by adding the stored value of TCT and newly issued credit at step 80, and then the new checksums for ICT and TCT are calculated at step 81. At step 82, ICT and TCT and the new checksums are written to the appropriate registers 16, 17 on the card 3, and the new card flag NC is reset to zero in the id register 18. An end of transaction message is displayed at step 83 whereupon the card can be withdrawn and operation reverts to step 20. The values of ICT and TCT are now both up-to-date, and since the NC flag has been reset at step 82, the card will be treated as an established card in subsequent transactions as previously described with reference to Figures 3 and 4.

Another advantage providing the TCR on the card will be apparent from the above description. That is, to bring the ICT of a newly issued card up-to-date, the CDT still need only write to the TCR and not to the ICR. The ICT is then updated at the POS using the data in the TCR. Since the CDT does not need to write to the ICR of the card, there is no danger of corruption of this register due to premature removal of the card from the CDT by the consumer.

In the above embodiment, the consumer loads credit to the card by taking the card to the POS terminal 4 which is at a public location. In alternative embodiments, the POS 4 (or a central controller which can perform the required processing operations) may be accessible from the consumer's premises, for example via a pc connected to the internet. In this case, the pc can be provided with an associated card interface for read/write operations to the card, and the necessary data can be transmitted between the consumer's pc and the remote POS to enable the required operations to be performed as described above. Thus, the pc effectively acts like a virtual extension to the POS, allowing credit to be purchased from the consumer's premises. Payment in this case could be made by supplying credit card details via the pc.

It will be appreciated that the many changes and modifications may be made to the above embodiment without departing from the scope of the invention as defined in the claims. For example, additional data, such as accounting data, time and date stamps etc. may be stored on the card 3 if required for additional security or accounting purposes. In addition, while the embodiment described is a gas meter system, the invention can of course be applied to metering of other utility services, eg. water and electricity, and also services such as pay television, video-on-demand etc., where supply of the service is effectively metered in relation to payment by the consumer, the consumer paying for eg. a period of viewing time or a specific item such as a film or programme.

## Claims

1. A credit transfer system for transferring credit, representing credited consumption of a metered service issued to a consumer, to a consumer metering apparatus which is selectively operable to cut-off the supply of the service to the consumer, the system comprising:
payment means (CDT2) for controlling supply of the metered service by the consumer metering apparatus in dependence on received credit and having a memory (12-15) for storing received credit data indicative of the total of all credit ever received by the payment means; and
a portable data storage device (3), associated with the payment means, for storing issued credit data indicative of the total of all credit ever issued for the payment means;
wherein the system includes means (10) for verifying the association of the data storage device and payment means, and wherein the payment means is operative to read the issued credit data from the associated data storage device and, if the association is verified, to determine from the issued credit data and said received credit data the amount of any newly issued credit, and to update said received credit data in accordance with the newly issued credit so determined.

2. A credit transfer system as claimed in claim 1, wherein the payment means includes the means for verifying said association.

3. Payment means for controlling supply of a service metered by consumer metering apparatus which is selectively operable to cut-off the supply of the service to the consumer, the payment means controlling said supply in dependence on credit, representing credited consumption of a metered service issued to the consumer, received by the payment means from a portable data storage device which is associated with the payment means and which stores issued credit data indicative of the total of all credit ever issued for the payment means, wherein the payment means comprises:
a memory (14) for storing received credit data indicative of the total of all credit ever received by the payment means; and
means for verifying the association of the data storage device and the payment means;
wherein the payment means is operative to read the issued credit data from the associated data storage device and, if said association is verified, to determine from the issued credit data and said received credit data the amount of any newly issued credit, and to update said received credit data in accordance with the newly issued credit so determined.

4. Apparatus as claimed in any preceding claim, wherein the data storage device stores association data indicating said association between the device and the payment means, and wherein said means for verifying comprises means for processing the association data to verify said association.

5. Apparatus as claimed in claim 4 wherein said association data is unique to the payment means.

6. Apparatus as claimed in claim 4 or claim 5, wherein said association data is provided by a checksum for said issued credit data, said checksum being derived by a predetermined algorithm, the payment means being operable to verify the checksum using said predetermined algorithm.

7. Apparatus as claimed in any proceeding claim, wherein the data storage device (3) additionally stores transferred credit data indicative of the total of all credit ever transferred by the device to the payment means.

8. Apparatus as claimed in claim 7, wherein the payment means (CDT 2) is operative to update the transferred credit data once said newly issued credit has been determined, the payment means updating said received credit data after updating of the transferred credit data.

9. Apparatus as claimed in claim 8, wherein the payment means (CDT 2) is arranged to verify that said transferred credit data has been correctly updated prior to updating the received credit data.

10. Apparatus as claimed in any preceding claim, wherein the payment means (CDT 2) is arranged for receiving consumption data, indicative of consumption of the metered service, from the metering apparatus (1) and to determine unused credit from the consumption data and received credit, said unused credit being updated in accordance with said newly issued credit data when said received credit data is updated, the payment means controlling supply of the service by the metering apparatus in dependence on said unused credit.

11. Apparatus as claimed in any preceding claim, wherein the payment means (CDT 2) comprises a payment unit which is arranged for remote communication with a meter (1) of the consumer metering apparatus.

12. Apparatus as claimed in any proceeding claim, wherein the portable data storage device (3) is a memory card and wherein the payment means includes a card reader.

13. A credit transfer system as claimed in claim 1 or any claim dependent thereon, including a credit issuing unit operable to update the issued credit data on the portable data storage device in accordance with newly issued credit following payment by the consumer and prior to transport of the device to the payment means.

14. A credit transfer system as claimed in claim 13, wherein the credit issuing unit is adapted for remote communication with a computer at the consumer's premises, the computer being connected to means providing a data communications interface with the portable data storage device, whereby data communications between the datastorage device and credit issuing unit are effected via the computer.

15. A method of transferring credit, representing credited consumption of a metered service issued to a consumer, to consumer metering apparatus (1) which is selectively operable to cut-off the supply of the service to the consumer and comprises payment means (CDT 2) for receiving credit and having a memory (10) for storing received credit data indicative of the total of all credit ever received by the payment means (CDT 2), and a service meter for metering consumption of the service by the consumer, the method comprising:
storing newly issued credit in a portable data storage device (3) which is 15 associated with the payment means, the newly issued credit being stored by updating issued credit data stored in the device which indicates the total of all credit ever issued for the payment means;
after transport of the device to the payment means, verifying the association of the device and payment means by verification means (10) of the system;
reading said issued credit data from the data storage device into the payment means; and
in the payment means, if said association is verified, determining from the issued credit data and said received credit data the amount of the newly issued credit and updating said received credit data in accordance with the newly issued credit.

## Patentansprüche

1. Guthabenübertragungssystem zum Übertragen von Guthaben, das einen gutgeschriebenen Verbrauch eines an einen Kunden ausgegebenen gemessenen Dienstes repräsentiert, an eine für den Kunden vorgesehene Meßvorrichtung, die wahlweise so betreibbar ist, daß sie die Lieferung des Dienstes an den Kunden unterbricht, wobei das System umfaßt:
Zahlungsmittel (CDT2) zum Steuern der Lieferung des gemessenen Dienstes durch die für den Kunden vorgesehene Meßvorrichtung in Abhängigkeit von einem empfangenen Guthaben, die einen Speicher (12-15) zum Speichern empfangener Guthabendaten, die das gesamte von den Zahlungsmitteln jemals empfangene Guthaben angibt, besitzt; und
eine tragbare Datenspeichervorrichtung (3), die den Zahlungsmitteln zugeordnet ist, um ausgegebene Guthabendaten, die das gesamte für die Zahlungsmittel jemals ausgegebene Guthaben angeben, zu speichern;
wobei das System Mittel (10) zum Verifizieren der Zuordnung der Datenspeichervorrichtung und der Zahlungsmittel enthält und wobei die Zahlungsmittel so betreibbar sind, daß sie die von der zugeordneten Datenspeichervorrichtung ausgegebenen Guthabendaten lesen und, falls die Zuordnung verifiziert wird, anhand der ausgegebenen Guthabendaten und der empfangenen Guthabendaten den Betrag irgendeines neu ausgegebenen Guthabens bestimmen und die empfangenen Guthabendaten in Übereinstimmung mit dem auf diese Weise bestimmten neu ausgegebenen Guthaben aktualisieren.

2. Guthabenübertragungssystem nach Anspruch 1, bei dem die Zahlungsmittel die Mittel für die Verifikation der Zuordnung enthalten.

3. Zahlungsmittel zum Steuern der Lieferung eines durch eine für den Kunden vorgesehene Meßvorrichtung gemessenen Dienstes, wobei die für den Kunden vorgesehene Meßvorrichtung wahlweise so betreibbar ist, daß sie die Lieferung des Dienstes an den Kunden unterbricht, wobei die Zahlungsmittel die Lieferung in Abhängigkeit von dem Guthaben steuern, das einen gutgeschriebenen Verbrauch eines an den Kunden ausgegebenen, gemessenen Dienstes repräsentiert und durch die Zahlungsmittel von einer tragbaren Datenspeichervorrichtung empfangen wird, die den Zahlungsmitteln zugeordnet ist und ausgegebene Guthabendaten speichert, die das gesamte jemals für die Zahlungsmittel ausgegebene Guthaben angeben, und wobei die Zahlungsmittel umfassen:
einen Speicher (14) zum Speichern empfangener Guthabendaten, die das gesamte jemals von den Zahlungsmitteln empfangene Guthaben angeben; und
Mittel zum Verifizieren der Zuordnung der Datenspeichervorrichtung und der Zahlungsmittel;
wobei die Zahlungsmittel so betreibbar sind, daß sie die von der zugeordneten Datenspeichervorrichtung ausgegebenen Guthabendaten lesen und, falls die Zuordnung verifiziert wird, anhand der ausgegebenen Guthabendaten und der empfangenen Guthabendaten den Betrag irgendeines neu ausgegebenen Guthabens bestimmen und die empfangenen Guthabendaten in Übereinstimmung mit dem auf diese Weise bestimmten neu ausgegebenen Guthaben aktualisieren.

4. Vorrichtung nach einem vorhergehenden Anspruch, bei der die Datenspeichervorrichtung Zuordnungsdaten speichert, die die Zuordnung zwischen der Vorrichtung und den Zahlungsmitteln angeben, und bei der die Mittel für die Verifikation Mittel umfassen, die die Zuordnungsdaten verarbeiten, um die Zuordnung zu verifizieren.

5. Vorrichtung nach Anspruch 4, bei der die Zuordnungsdaten für die Zahlungsmittel eindeutig sind.

6. Vorrichtung nach Anspruch 4 oder Anspruch 5, bei der die Zuordnungsdaten durch eine Prüfsumme für die ausgegebenen Guthabendaten geschaffen werden, wobei die Prüfsumme durch einen vorgegebenen Algorithmus abgeleitet wird und die Zahlungsmittel so betreibbar sind, daß sie die Prüfsumme unter Verwendung des vorgegebenen Algorithmus verifizieren.

7. Vorrichtung nach einem vorhergehenden Anspruch, bei der die Datenspeichervorrichtung (3) außerdem übertragene Guthabendaten speichert, die das gesamte jemals von der Vorrichtung an die Zahlungsmittel übertragene Guthaben angeben.

8. Vorrichtung nach Anspruch 7, bei der die Zahlungsmittel (CDT2) so betreibbar sind, daß sie die übertragenen Guthabendaten aktualisieren, sobald das neu ausgegebene Guthaben bestimmt worden ist, wobei die Zahlungsmittel die empfangenen Guthabendaten aktualisieren, nachdem sie die übertragenen Guthabendaten aktualisiert haben.

9. Vorrichtung nach Anspruch 8, bei der die Zahlungsmittel (CDT2) so beschaffen sind, daß sie verifizieren, daß die übertragenen Guthabendaten korrekt aktualisiert worden sind, bevor sie die empfangenen Guthabendaten aktualisieren.

10. Vorrichtung nach einem vorhergehenden Anspruch, bei der die Zahlungsmittel (CDT2) so beschaffen sind, daß sie Verbrauchsdaten, die den Verbrauch des gemessenen Dienstes angeben, von der Meßgvorrichtung (1) empfangen und nicht verwendetes Guthaben aus den Verbrauchsdaten und dem empfangenen Guthaben bestimmen, wobei das nicht verwendete Guthaben in Übereinstimmung mit den neu ausgegebenen Guthabendaten aktualisiert wird, wenn die empfangenen Guthabendaten aktualisiert werden, wobei die Zahlungsmittel die Lieferung des Dienstes durch die Meßvorrichtung in Abhängigkeit von dem nicht verwendeten Guthaben steuern.

11. Vorrichtung nach einem vorhergehenden Anspruch, bei der die Zahlungsmittel (CDT2) eine Zahlungseinheit umfassen, die so beschaffen ist, daß sie mit einem Zähler (1) der für den Kunden vorgesehene Meßvorrichtung in einer Fernkommunikation stehen.

12. Vorrichtung nach einem vorhergehenden Anspruch, bei der die tragbare Datenspeichervorrichtung (3) eine Speicherkarte ist und bei der die Zahlungsmittel einen Kartenleser enthalten.

13. Guthabenübertragungssystem nach Anspruch 1 oder einem hiervon abhängigen Anspruch, mit einer Guthabenausgabeeinheit, die so betreibbar ist, daß sie die ausgegebenen Guthabendaten in der tragbaren Datenspeichervorrichtung in Übereinstimmung mit dem neu ausgegeben Guthaben nach einer Zahlung durch den Kunden und vor dem Transport der Vorrichtung zu den Zahlungsmitteln aktualisiert.

14. Guthabenübertragungssystem nach Anspruch 13, bei dem die Guthabenausgabeeinheit für eine Fernkommunikation mit einem Computer am Kundenstandort geeignet ist, wobei der Computer mit Mitteln für die Bereitstellung einer Datenkommunikationsschnittstelle mit der tragbaren Datenspeichervorrichtung verbunden ist, wobei die Datenkommunikation zwischen der Datenspeichervorrichtung und der Guthabenausgabeeinheit über den Computer erfolgt.

15. Verfahren zum Übertragen von Guthaben, das einen gutgeschriebenen Verbrauch eines an einen Kunden ausgegebenen, gemessenen Dienstes repräsentiert, an eine für den Kunden vorgesehene Meßvorrichtung (1), die wahlweise so betreibbar ist, daß sie die Lieferung des Dienstes an den Kunden unterbricht, und Zahlungsmittel (CDT2), die Guthaben empfangen und einen Speicher (10) zum Speichern empfangener Guthabendaten, die das gesamte jemals von den Zahlungsmitteln (CDT2) empfangene Guthaben angeben, sowie einen Dienstzähler, der den Verbrauch des Dienstes durch den Kunden mißt, umfaßt, wobei in dem Verfahren:
ein neu ausgegebenes Guthaben in einer tragbaren Datenspeichervorrichtung (3), die den Zahlungsmitteln zugeordnet ist, gespeichert wird, wobei das neu ausgegebene Guthaben durch Aktualisieren ausgegebener Guthabendaten, die in der Vorrichtung gespeichert sind und das gesamte jemals für die Zahlungsmittel ausgegebene Guthaben angeben, gespeichert wird;
nach dem Transport der Vorrichtung zu den Zahlungsmitteln die Zuordnung der Vorrichtung und der Zahlungsmittel durch Verifikationsmittel (10) des Systems verifiziert wird;
die von der Datenspeichervorrichtung in die Zahlungsmittel ausgegebenen Guthabendaten gelesen werden; und
in den Zahlungsmitteln dann, wenn die Zuordnung verifiziert wird, anhand der ausgegebenen Guthabendaten und der empfangenen Guthabendaten der Betrag des neu ausgegebenen Guthabens bestimmt wird und die empfangenen Guthabendaten in Übereinstimmung mit dem neu ausgegebenen Guthaben aktualisiert werden.

## Revendications

1. Un système de transfert de crédit permettant de transférer le crédit, affichant la consommation attribuée et fournie à un consommateur par un service de distribution au moyen d'un compteur de consommation qui peut être mis en oeuvre de façon sélective pour couper l'approvisionnement du service fourni au consommateur ; le système se composant :
d'un moyen de paiement (TVA2) pour contrôler la fourniture faite au consommateur via le service de distribution muni de compteurs, fourniture faite en fonction du crédit reçu ; ce système disposant d'une mémoire (12-15) pour stocker les données de crédit reçues indiquant le total de tous les crédits reçus par le moyen de paiement ; et
d'un dispositif portatif de stockage des données (3), associé au moyen de paiement, pour stocker les indications de données de crédit émises sur la totalité du crédit reçu provenant du moyen de paiement ;
où le système comprend des moyens (10) pour vérifier l'association entre le système de stockage des données et le moyen de paiement et où le moyen de paiement est capable de lire les données de crédit émises provenant du système de stockage des données associé et, si l'association est vérifiée, de déterminer, à partir des données de crédit émises et des dites données de crédit reçues, le montant d'un quelconque crédit nouvellement émis, et de mettre à jour les dites données de crédit reçues selon les stipulations du nouveau crédit émis et ainsi déterminé.

2. Un système de transfert de crédit, d'après la revendication 1, **caractérisé par le fait que** le moyen de paiement inclut le moyen de vérification de la dite association.

3. Moyen de paiement pour contrôler la fourniture faite au consommateur via le service de distribution qui peut être mis en oeuvre de façon sélective pour couper l'approvisionnement du service fourni au consommateur, le moyen de paiement commandant le dit approvisionnement délivré au consommateur, reçu par le moyen de paiement à partir d'un dispositif portatif de stockage de données qui est associé au moyen de paiement et qui stocke les données de crédit délivrées indiquant le total de tous les crédits présentement délivrés pour le moyen de paiement, **caractérisé par le fait que** le moyen de paiement se compose :
d'une mémoire (4) destinée au stockage des données attribuées indiquant le total de tous les crédits présentement reçus par le moyen de paiement ; et
d'un moyen destiné à la vérification de l'association entre le dispositif de stockage des données et le moyen de paiement ;
**caractérisé par le fait que** le moyen de paiement est capable de lire les données de crédit délivrées à partir du dispositif de stockage des données associées et, si la dite association est vérifiée, de déterminer à partir des données de crédit délivrées et des dites données reçues, le montant de tout nouveau crédit délivré ; puis d'actualiser les dites données de crédit reçues conformément au nouveau crédit délivré tel qu'il a été déterminé.

4. Appareil d'après une des précédentes revendications, **caractérisé par le fait que** le dispositif de stockage de données stocke l'indication des données d'association et la dite association entre le dispositif et le moyen de paiement ; et **par le fait que** le dit moyen de vérification comprend le moyen de traitement des données d'association permettant de contrôler la dite association.

5. Appareil d'après la revendication 4, **caractérisé par le fait que** la donnée d'association est unique pour le moyen de paiement.

6. Appareil d'après la revendication 4 ou 5, **caractérisé par le fait que** la dite donnée d'association est fournie par une somme de contrôle pour la dite donnée de crédit délivré, la dite somme de contrôle provenant d'un algorithme prédéterminé, le moyen de paiement étant capable de vérifier la somme de contrôle utilisant le dit algorithme prédéterminé.

7. Appareil d'après une des précédentes revendications, **caractérisé par le fait que** le dispositif de stockage de données (3) stocke en plus les données du crédit transféré indiquant le total de tous les crédits présentement transférés par le dispositif vers le moyen de paiement.

8. Appareil d'après la revendication 7, **caractérisé par le fait que** le moyen de paiement (TVA 2) est en mesure d'actualiser les données du crédit transféré une fois que le dit crédit a été déterminé, le moyen de paiement actualisant les dites données de crédit délivré après la mise à jour des données du crédit transféré.

9. Appareil d'après la revendication 8, **caractérisé par le fait que** le moyen de paiement (TVA 2) est en mesure de vérifier que les dites données du crédit transféré ont été correctement actualisées avant la mise à jour des données de crédit délivré.

10. Appareil d'après une des précédentes revendications, **caractérisé par le fait que** le moyen de paiement (TVA 2) est en mesure de réceptionner les données de consommation, indiquant la consommation du service de distribution, à partir du compteur (1) et de déterminer, à partir des données de consommation et du crédit reçu, quel est le crédit non utilisé, le dit crédit non utilisé étant actualisé conformément aux dites données du crédit nouvellement délivré lorsque les dites données de crédit reçu ont été actualisées, le moyen de paiement contrôlant, grâce au compteur, la fourniture du service, conformément au dit crédit non utilisé.

11. Appareil d'après une des précédentes revendications, **caractérisé par le fait que** le moyen de paiement (TVA 2) comprend une unité de paiement qui est adaptée pour communiquer à distance avec le compteur (1) du service de distribution du consommateur.

12. Appareil d'après une des précédentes revendications, **caractérisé par le fait que** le dispositif portatif de stockage de données (3) est une carte mémoire et **par le fait que** le moyen de paiement inclut un lecteur de carte.

13. Un système de transfert de crédit, d'après la revendication 1 ou d'après une des revendications en dépendant, incluant une unité d'établissement de crédit capable d'actualiser, sur le dispositif portatif de stockage de données, les données de crédit délivré, conformément au nouveau crédit délivré à la suite du paiement fait par le consommateur et avant le transport du dispositif vers le moyen de paiement.

14. Un système de transfert de crédit, d'après la revendication 13, **caractérisé par le fait que** l'unité d'établissement de crédit est capable de communiquer à distance avec un ordinateur situé dans les locaux du consommateur, le dit ordinateur étant connecté à un moyen fournissant une interface de communications de données avec le dispositif portatif de stockage de données, ce qui fait que les communications de données entre le dispositif de stockage de données et l'unité d'établissement de crédit seront effectuées par l'ordinateur.

15. Une méthode de transfert du crédit, affichant la consommation créditée par un service de distribution et délivrée à un consommateur, au moyen d'un compteur de consommation (1) dont la sélectivité contrôlable permet de couper la fourniture du service faite au consommateur et qui comprend un moyen de paiement (TVA 2) pour réceptionner le crédit et qui dispose d'une mémoire (10) pour stocker les données de crédit reçu indiquant le total de tous les crédits présentement reçus par le moyen de paiement (TVA 2), ainsi qu'un compteur permettant de mesurer la consommation du service fourni au consommateur, la méthode comprenant :
le stockage du crédit nouvellement délivré dans un dispositif portatif de stockage des données (10) qui est associé au moyen de paiement, le nouveau crédit délivré étant stocké lors de l'actualisation des données de crédit délivrées qui sont stockées dans le dispositif, avec indication du total de tous les crédits délivrés jusqu'à présent au moyen de paiement ;
après transfert du dispositif vers le moyen de paiement, la vérification de l'association entre le dispositif et le moyen de paiement grâce aux éléments de vérification du dispositif (10);
la lecture des dites données de crédit délivrées par le dispositif de stockage des données au moyen de paiement ; et
dans le moyen de paiement, si la dite association est vérifiée, la détermination, à partir des données de crédit délivrées et des dites données de crédit reçues, du montant du crédit nouvellement délivré puis actualisation des données de crédit reçues conformément au crédit nouvellement délivré.
